# FASCICULE DE BREVET EUROPEEN

(11) **EP 3 194 881 B1**
(45) Date de publication et mention de la délivrance du brevet: **10.10.2018**
(21) Numéro de dépôt: 15756410.5
(22) Date de dépôt: 31.08.2015
(51) Int. Cl.: F41G 11/00, F41H 7/02

(54) **SYSTEME DE VISEE ESCAMOTABLE**
ZURÜCKZIEHBARES ZIELSYSTEM
RETRACTABLE AIMING SYSTEM

(30) Priorité: 04.09.2014 BE 201400667
(43) Date de publication de la demande: 26.07.2017
(73) Titulaire: CMI Defence S.A., 4431 Loncin (BE)
(72) Inventeur: DUMONT, Vincent, 4600 Vise (BE); DELVAUX, Philippe, 4052 Beaufays (BE)
(74) Mandataire: Pronovem
(86) Numéro de dépôt international: PCT/EP2015/069823
(87) Numéro de publication internationale: WO 2016/034528

(56) Documents cités:
- EP-A2- 1 061 323
- DE-A1- 2 609 594
- GB-A- 646 029
- US-A- 4 161 352
- US-A1- 2008 202 326

## Description

### Objet de l'invention

La présente invention se rapporte au domaine des systèmes de visée pour armes équipant les véhicules militaires.

La présente invention se rapporte plus particulièrement à un système de visée escamotable et au véhicule comprenant ce système de visée.

### Arrière-plan technologique et état de la technique

Les systèmes de visée des véhicules blindés et chars de combat comportent un bloc optique qui, en opération, est disposé à l'extérieur du véhicule comme illustré à la figure 1 du document EP 2 458 244 et à la figure 3 du document EP 2 669 617. Le bloc optique est proéminent et dépasse largement de la tourelle du véhicule militaire, ce qui est problématique lors du transport par avion et par train du véhicule.

Actuellement, le problème est solutionné en démontant le bloc optique avant transport et en le remontant après transport, ce qui est une opération longue et fastidieuse.

Aussi, il existe dans la tourelle CT-CV™ un système de visée qui est escamotable. Cependant, le désavantage du système existant est que l'outillage est encombrant dans l'environnement restreint de la tourelle lorsque le bloc optique est en position déployée. De par sa fixité, soit l'outillage est laissé en place et gêne, soit il est démonté et entraîne une perte de temps.

Le dispositif du document US 4,161,352 présente ce même désavantage. Ce document divulgue un dispositif de surveillance de type périscope déployable à l'extérieur d'un véhicule à l'aide d'un système à vis et écrou. Le dispositif comporte la vis qui est solidaire du bloc optique monté mobile en translation et l'écrou solidaire d'un châssis qui occupe le volume intérieur du véhicule. Lors du déploiement extérieur, le bloc optique se déplace verticalement laissant le volume intérieur du véhicule occupé par le châssis.

Dans le cas d'une tourelle, par opposition à un simple véhicule de surveillance tel que décrit dans document US 4,161,352, le volume disponible à l'intérieur est particulièrement critique dû à la quantité des équipements. En outre, le système à déployer est un système de visée qui inclut de nombreux capteurs (optique, thermique, laser, gyroscope, etc.) et non un simple périscope comme dans le document précité. Vu sa complexité, le volume occupé par le système de visée est particulièrement conséquent, d'où la nécessité qu'il puisse être déployé sans laisser de structure imposante à l'intérieur de la tourelle. Ensuite, il faut que le système puisse être repositionné rapidement en position déployée sans qu'il soit nécessaire de l'ajuster pour assurer les performances de visée. US 2008/0202326 A1 décrit un système de visée monté sur une arme escamotable.

### Buts de l'invention

La présente invention a pour but de réaliser un système de visée adapté pour éviter l'opération de montage et démontage du bloc optique lors du transport du véhicule. L'invention est un système de visée selon la revendication 1. Des modes de réalisations préférés sont décrits dans les revendications dépendantes 2-14.

Plus précisément, la présente invention a pour objectif de réaliser un système de visée escamotable où l'espace occupé dans la tourelle par le mécanisme est réduit lorsque le bloc optique est déployé.

La présente invention vise en outre à réaliser un système permettant un placement rapide et aisé en position déployée ou rentrée du bloc optique.

Aussi, la présente invention vise à réaliser un système de visée escamotable avec des performances de visée maintenues après repositionnement du bloc optique en position déployée.

### Brève description des figures

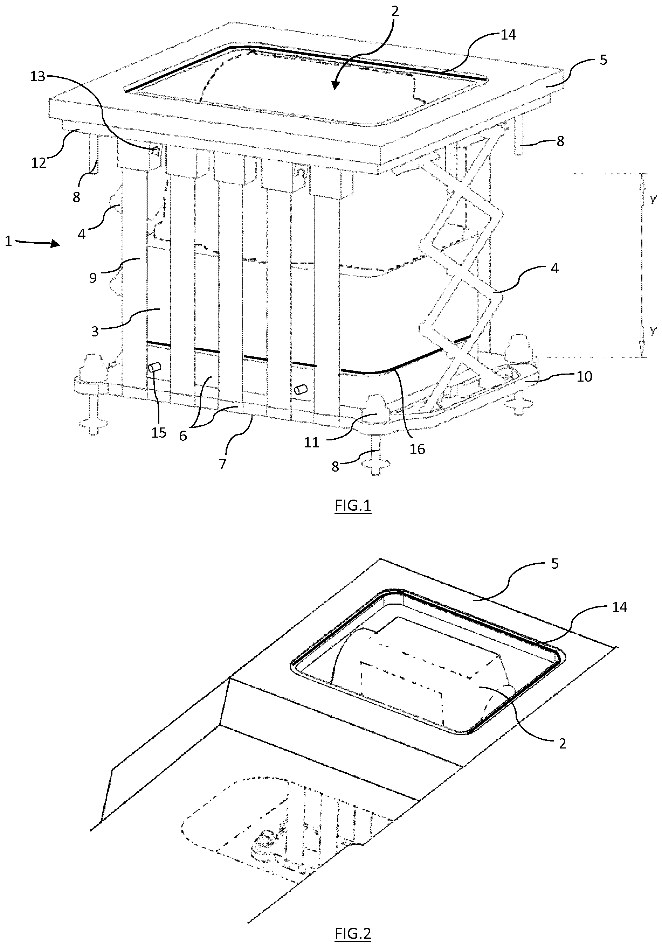

La figure 1 représente le système de visée muni du mécanisme d'escamotage selon l'invention avec le bloc optique en position escamotée. La figure 2 représente une vue partielle de la partie supérieure du véhicule, et plus précisément du toit de la tourelle du véhicule, avec ce même bloc optique en position escamotée à l'intérieur du véhicule.

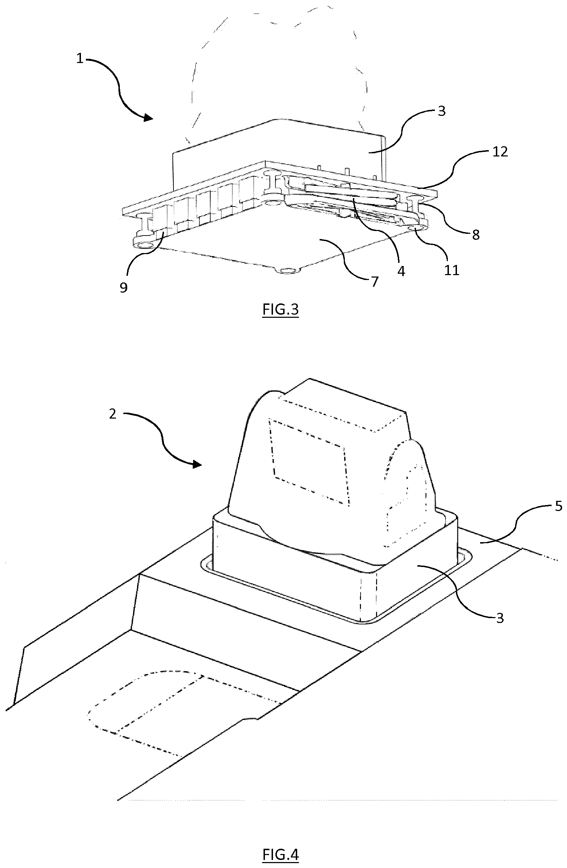

La figure 3 représente le système de visée muni du mécanisme d'escamotage selon l'invention avec le bloc optique en position déployée, l'optique étant représentée en traits discontinus. La figure 4 représente une vue partielle de la partie supérieure du véhicule, et plus précisément du toit de la tourelle du véhicule, avec ce même bloc optique en position déployée à l'extérieur du véhicule.

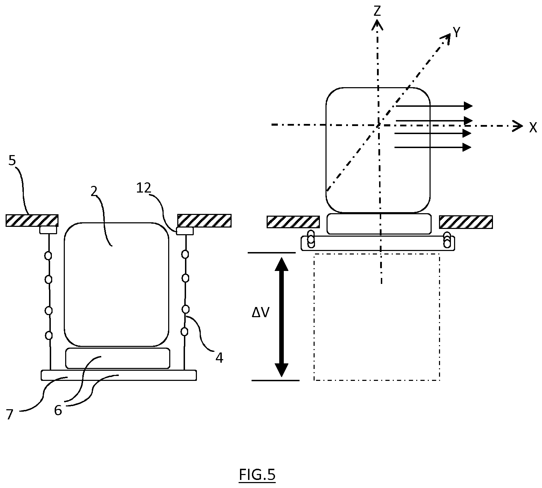

La figure 5 représente schématiquement le gain de volume (ΔV) à l'intérieur du véhicule lorsque le bloc optique est en position déployée, ainsi que le correct positionnement du système de visée par rapport aux trois axes et son parallélisme par rapport à la ligne de tir.

### Légende

(1) Système de visée
(2) Bloc optique
(3) Socle d'interface supérieur
(4) Mécanisme à ciseaux
(5) Coque du véhicule
(6) Support
(7) Base plane, aussi appelée plaque de base du support
(8) Tige de fixation
(9) Ressort
(10) Poignée
(11) Ecrou
(12) Plaque d'interface, aussi appelée structure fixe ou plaque fixe qui peut être rapportée à la coque du véhicule ou usinée dans la coque du véhicule
(13) Encoche de repositionnement
(14) Joint d'étanchéité externe
(15) Doigt de repositionnement
(16) Joint d'étanchéité interne

### Principaux éléments caractéristiques de l'invention

La présente invention se rapporte à un système de visée escamotable destiné à équiper un véhicule militaire terrestre, ledit système comprenant un bloc optique et un mécanisme rétractable assurant le déplacement du bloc optique entre deux positions, une première position étant à l'extérieur du véhicule et une seconde position étant à l'intérieur du véhicule.

La présente invention se rapporte à un système de visée escamotable selon la revendication 1.

Selon des modes particuliers de l'invention, le système de visée comporte au moins une ou plusieurs combinaisons appropriées des caractéristiques suivantes :
- le système de visée escamotable est dépourvu d'un châssis qui restreint le volume intérieur du véhicule lorsque le bloc optique est en première position ;
- le mécanisme rétractable est un mécanisme à ciseaux ;
- il comprend un support monté mobile sur lequel le bloc optique repose ;
- le support comporte une base plane aussi appelée plaque de base ;
- le mécanisme à ciseaux comporte des branches situées respectivement de part et d'autre du bloc optique, lesdites branches étant couplées à une extrémité à la plaque de base et à l'autre extrémité à la structure sur laquelle la plaque de base se positionne lorsque le bloc optique est en première position ;
- il comprend plusieurs ressorts à pression constante servant de contrepoids au poids du système de visée ;
- les ressorts sont disposés de part et d'autre du bloc optique et relient la plaque de base à la structure ;
- il comprend un mécanisme de repositionnement qui assure en fin de déplacement vers la première position un placement précis de la plaque de base sur la structure ;
- le mécanisme de repositionnement comporte des doigts positionnés sur le support et des encoches solidaires de la structure, lesdits doigts coopérant avec les encoches pour assurer le parallélisme du système par rapport à l'axe d'un canon équipant le véhicule ;
- il comprend des moyens pour verrouiller le système de visée dans la première position opérationnelle ;
- lesdits moyens comportent des écrous à serrage rapide positionnés sur la plaque de base et coopérant avec des tiges solidaires de la structure ;
- la plaque de base est munie d'une poignée pour faciliter la manutention du bloc optique ;
- la structure est destinée à être montée sur une paroi intérieure de la coque du véhicule ;
- la structure est une plaque d'interface ayant un plan parallèle par rapport à l'axe du canon équipant le véhicule ;
- la structure est une paroi intérieure de la coque du véhicule ;
- il comprend des joints d'étanchéité assurant l'étanchéité du système lorsque le bloc optique est en première position ;
- il comprend un premier joint placé sur l'extrémité supérieure du support et destiné à se positionner à l'intérieur du véhicule sur la structure lorsque le bloc optique est en première position, et comprenant un second joint destiné à être placé à l'extérieur du véhicule sur un pourtour d'une ouverture pratiquée dans la coque pour permettre le passage du bloc optique ;
- il comprend un socle d'interface positionné entre le support et le bloc optique et permettant de placer différents types de blocs optiques ;
- le système est configuré pour que, dans la première position, l'entièreté du bloc optique soit à l'extérieur du véhicule et dans la seconde position, l'entièreté du bloc optique soit à l'intérieur du véhicule ;
- il est en outre configuré pour que, dans la première position, le socle d'interface soit positionné à l'extérieur du véhicule.

La présente invention se rapporte également au véhicule militaire terrestre comportant le système de visée escamotable décrit ci-dessus.

### Description détaillée de l'invention

La présente invention se rapporte à un système de visée escamotable selon la revendication 1.

Le système de visée 1 selon l'invention est présenté à la figure 1 en position escamotée. Une vue plus étendue avec une partie du toit de la tourelle du véhicule est représentée à la figure 2. Le système de visée est présenté en position déployée à la figure 3 avec également une vue plus large à la figure 4.

Le système de visée 1 comporte un bloc optique 2 reposant sur un socle d'interface 3 dimensionné en fonction du véhicule et de l'optique. Ce socle 3 est lui-même monté sur un support 6 doté d'une base plane qu'on qualifiera de plaque de base 7, surmontée d'une partie de forme sensiblement complémentaire à celle du socle d'interface. Le support 6 est monté mobile en translation et se déplace verticalement grâce à un mécanisme rétractable. On entend par mécanisme rétractable un mécanisme qui peut se contracter, ou être comprimé en d'autres mots, pour libérer de l'espace au sein du véhicule. Par exemple et, à titre illustratif, il peut s'agir d'un mécanisme de type mécanisme à ciseaux 4. De préférence, le mécanisme à ciseaux 4 est muni de branches disposées respectivement de part et d'autre du bloc optique 2. Les branches du mécanisme à ciseaux 4 sont solidaires à leurs extrémités inférieures de la plaque de base 7 du support. A leurs extrémités supérieures, les branches du mécanisme à ciseaux 4 sont soit directement solidaires de la paroi intérieure de la coque 5 du véhicule soit solidaires d'une plaque d'interface 12 montée sur la paroi intérieure de la coque 5 du véhicule. Par opposition au support qui est monté mobile, on qualifiera la plaque d'interface 12 ou la coque 5 de structure fixe.

Le système de visée selon l'invention comporte en outre un mécanisme de repositionnement qui assure en fin de course le placement précis de la plaque de base 7 sur la structure fixe 12. Ce mécanisme de positionnement comporte des doigts 15 disposés sur le support 6 et, plus précisément sur sa partie supérieure, coopérant avec des encoches 13 ménagées dans la structure fixe 12 ou dans des languettes solidaires de la structure fixe comme montré à la figure 1.

Le système de visée selon l'invention comporte également des moyens pour fixer la plaque de base 7 à la structure fixe 12 lorsque le bloc optique 2 est déployé, c.à.d. lorsque la plaque de base 7 est en position haute comme montré aux figures 3 et 4. Par exemple, la plaque de base 7 peut être verrouillée en position haute sur la structure fixe 12 à l'aide d'écrous 11 à serrage rapide par l'intermédiaire de quatre repères sous forme de tiges 8 assurant la solidarisation du système.

Le système de visée comporte aussi un contrepoids sous forme de ressorts 9 à pression constante qui compense le poids de l'optique. Cela permet d'annuler le poids de l'optique à déplacer indépendamment de la course parcourue et ce, dans le sens de la descente mais également de la remontée de l'optique. Les ressorts 9 sont répartis de part et d'autre du bloc optique sur des faces distinctes de celles où sont positionnées les branches du mécanisme à ciseaux. Ils sont fixés à une extrémité à la plaque de base 7 et à l'autre extrémité à la structure fixe 12. Chaque ressort à pression constante peut reprendre jusqu'à, par exemple, 15kg. Le nombre de ressorts est donc fonction du poids de l'optique utilisée. Dans l'exemple illustré, cinq ressorts sont disposés de part et d'autre du bloc optique.

Selon l'invention, l'étanchéité est assurée par un premier joint 14 disposé sur la paroi externe de la coque 5 et, plus précisément, dans une rainure ménagée sur le pourtour de l'ouverture pratiquée dans la coque pour le passage du bloc optique. Elle est en outre assurée par un second joint 16 positionné à l'extrémité supérieure du support 6 à la jonction avec le socle d'interface 3.

Finalement, on précisera que la plaque de base 7 comporte une poignée 10 pour faciliter la manutention du dispositif.

En opération, le bloc optique 2 et le socle d'interface 3 sont positionnés à l'extérieur de la tourelle du véhicule, le bloc optique étant verrouillé en position de déploiement à l'aide des écrous de serrage 11. Lorsque le véhicule n'est pas opérationnel, les écrous peuvent être dévissés pour permettre l'escamotage du bloc optique à l'intérieur de la tourelle du véhicule, une descente brutale du bloc optique étant évitée grâce aux ressorts. Le bloc optique pourra aisément être repositionné en position opérationnelle en appliquant une contrainte sur la plaque de base, le déplacement vertical étant assuré par le mécanisme à ciseaux et le mécanisme de repositionnement.

### Avantages de l'invention

Grâce au système de ressorts, le temps d'opération est réduit au minimum, de l'ordre de quelques minutes, par rapport au système actuel nécessitant un montage et démontage prenant plusieurs heures. Le véhicule est dès lors pratiquement opérationnel dès sa sortie d'avion ou de train.

En plus d'être rapide, la mise en station est sécurisée et aisée, ne nécessitant qu'un seul homme.

Le véhicule équipé du système de visée escamotable peut être aisément transporté sur tout type d'avions et de trains.

Grâce au mécanisme rétractable, l'encombrement à l'intérieur du véhicule ou de la tourelle est limité lorsque le bloc optique est en position finale remontée comme schématisé à la figure 5. Ainsi, la compression du mécanisme à ciseaux permet de réduire la hauteur occupée dans la tourelle par le système de visée de plus de 80% et, de préférence, de plus de 90%. Dès lors, l'espace libéré peut être réalloué à d'autres mécanismes en opération.

Le guidage du dispositif permet d'assurer la descente et la montée du bloc optique selon un axe vertical.

Un contrepoids est créé pour répondre à la nécessité d'une manutention soigneuse et sécurisée requise par le poids du système de visée (+/- 100 kg) et sa fragilité.

Selon l'invention, le système de repositionnement et la parfaite planéité de la base du support permettent d'assurer le parallélisme du système de visée par rapport à la ligne de tir et, par là-même, de garantir les performances du système de visée lorsque le bloc optique est en position opérationnelle comme illustré à la figure 5. En outre, la précision de la localisation en position rentrée ou déployée permet de garantir une bonne étanchéité grâce aux joints. Cela est particulièrement important pour assurer le fonctionnement en conditions climatiques défavorables et se protéger en cas d'attaques chimiques NBC.

Le socle d'interface permet d'utiliser diverses optiques panoramiques.

Le système de visée escamotable selon l'invention présente en outre les avantages suivants :
- pas de pièces de grande précision à commander,
- enveloppe de taille réduite par rapport au mécanisme existant dans la tourelle CT-CV™,
- possibilité d'application ultérieure des modules de ressort à pression constante.

## Revendications

1. Système de visée (1) escamotable destiné à équiper un véhicule militaire terrestre, ledit système (1) comprenant un bloc optique (2) et un mécanisme assurant, en utilisation, le déplacement en translation du bloc optique (2) entre deux positions, une première position étant à l'extérieur du véhicule et une seconde position étant à l'intérieur du véhicule, tel que ledit mécanisme est rétractable afin de réduire l'encombrement à l'intérieur du véhicule lorsque le bloc optique (2) est en première position, le déplacement du bloc optique (2) entre la seconde position et la première position permettant selon l'axe de translation de réduire la longueur occupée par le système de visée (1) au sein du véhicule de plus de 80% et, de préférence, de plus de 90%.

2. Système de visée (1) selon la revendication 1, dans lequel le mécanisme rétractable est un mécanisme à ciseaux (4).

3. Système de visée (1) selon l'une quelconque des revendications précédentes, comprenant un support (6) monté mobile sur lequel le bloc optique (2) repose, ledit support (6) comportant une base plane aussi appelée plaque de base (7).

4. Système de visée (1) selon l'une des revendication 2 à 3, dans lequel le mécanisme à ciseaux (4) comporte des branches situées respectivement de part et d'autre du bloc optique (2), lesdites branches étant couplées à une extrémité à la plaque de base (7) et à l'autre extrémité à une structure (12) sur laquelle la plaque de base (7) se positionne lorsque le bloc optique (2) est en première position.

5. Système de visée (1) selon l'une quelconque des revendications précédentes, comprenant plusieurs ressorts (9) à pression constante servant de contrepoids au poids du système de visée (1).

6. Système de visée (1) selon la revendication 5, dans lequel les ressorts (9) sont disposés de part et d'autre du bloc optique (2) et relient la plaque de base (7) à la structure (12).

7. Système de visée (1) selon l'une quelconque des revendications précédentes, comprenant un mécanisme de repositionnement qui assure en fin de déplacement vers la première position un placement précis de la plaque de base (7) sur la structure (12).

8. Système de visée (1) selon la revendication 7, dans lequel le mécanisme de repositionnement comporte des doigts (15) positionnés sur le support (6) et des encoches (13) solidaires de la structure (12), lesdits doigts (15) coopérant avec les encoches (13) pour assurer le parallélisme du système (1) par rapport à l'axe d'un canon équipant le véhicule.

9. Système de visée (1) selon l'une quelconque des revendications précédentes, comprenant des moyens pour verrouiller le système de visée (1) dans la première position, lesdits moyens comportant des écrous (11) à serrage rapide positionnés sur la plaque de base (7) et coopérant avec des tiges (8) solidaires de la structure (12).

10. Système de visée (1) selon l'une quelconque des revendications précédentes, dans lequel la structure (12) est une plaque d'interface destinée à être montée sur une paroi intérieure d'une coque (5) du véhicule, ladite plaque d'interface ayant un plan parallèle par rapport à l'axe du canon équipant le véhicule.

11. Système de visée (1) selon l'une quelconque des revendications précédentes, dans lequel la structure (12) est une paroi intérieure d'une coque (5) du véhicule.

12. Système de visée (1) selon l'une quelconque des revendications précédentes, comprenant des joints d'étanchéité assurant l'étanchéité du système (1) lorsque le bloc optique (2) est en première position, un premier joint (16) étant placé sur l'extrémité supérieure du support (6) et destiné à se positionner sur la structure (12) à l'intérieur du véhicule lorsque le bloc optique (2) est en première position, un second joint (14) étant destiné à être placé à l'extérieur du véhicule sur un pourtour d'une ouverture pratiquée dans la coque (5) pour permettre le passage du bloc optique (2).

13. Système de visée (1) selon l'une quelconque des revendications précédentes, comprenant un socle d'interface (3) positionné entre le support (6) et le bloc optique (2) et permettant de placer différents types de blocs optiques (2).

14. Véhicule militaire terrestre comportant un système de visée (1) escamotable selon l'une quelconque des revendications précédentes.

## Patentansprüche

1. Versenkbares Visiersystem (1) zur Ausrüstung eines militärischen Landfahrzeugs, wobei das System (1) umfasst: eine Optikeinheit (2) und einen Mechanismus, der im Einsatz die Verschiebung der Optikeinheit (2) zwischen zwei Stellungen gewährleistet, wobei sich eine erste Stellung außerhalb des Fahrzeugs befindet und eine zweite Stellung im inneren des Fahrzeugs befindet, sodass der Mechanismus einziehbar ist, um im Fahrzeuginneren weniger Platz einzunehmen, wenn sich die Optikeinheit (2) in der ersten Stellung befindet, wobei die Verschiebung der Optikeinheit (2) zwischen der zweiten und der ersten Stellung je nach Verschiebungsachse eine Reduzierung der Länge des vom Visiersystem (1) im Fahrzeuginneren belegten Platzes um mehr als 80 %, und vorzugsweise mehr als 90 %, ermöglicht.

2. Visiersystem (1) nach Anspruch 1, wobei der einziehbare Mechanismus ein Scherenmechanismus (4) ist.

3. Visiersystem (1) nach einem der vorstehenden Ansprüche, umfassend eine beweglich montierte Halterung (6), auf der die Optikeinheit (2) aufliegt, wobei die Halterung (6) eine plane Basis, auch Grundplatte (7) genannt, umfasst.

4. Visiersystem (1) nach einem der Ansprüche 2 - 3, wobei der Scherenmechanismus (4) Zweige umfasst, die beiderseits der Optikeinheit (2) angeordnet sind, wobei die Zweige an einem Ende mit der Grundplatte (7) gekoppelt sind, und am anderen Ende mit einer Struktur (12) gekoppelt sind, auf der sich die Grundplatte (7) positioniert, wenn sich die Optikeinheit (2) in der ersten Stellung befindet.

5. Visiersystem (1) nach einem der vorstehenden Ansprüche, umfassend mehrere Federn (9) mit gleichbleibendem Druck, die als Gegengewicht des Gewichts des Visiersystems (1) fungieren.

6. Visiersystem (1) nach Anspruch 5, wobei die Federn (9) beiderseits der Optikeinheit (2) positioniert sind und die Grundplatte (7) mit der Struktur (12) verbinden.

7. Visiersystem (1) nach einem der vorstehenden Ansprüche, umfassend einen Positioniermechanismus, der die genaue Positionierung der Grundplatte (7) auf der Struktur (12) am Ende ihrer Verschiebung in die erste Stellung gewährleistet.

8. Visiersystem (1) nach Anspruch 7, wobei der Positioniermechanismus auf der Halterung (6) positionierte Greifelemente (15) und mit der Struktur (12) verbundene Aussparungen (13) umfasst, wobei die Greifelemente (15) mit den Aussparungen (13) zusammenwirken, um die Parallelität des Systems (1) bezogen auf die Achse einer Kanone, mit der das Fahrzeug ausgestattet ist, zu gewährleisten.

9. Visiersystem (1) nach einem der vorstehenden Ansprüche, umfassend Mittel zur Verriegelung des Visiersystems (1) in der ersten Stellung, wobei die Mittel Schnellspannmuttern (11) umfasst, die auf der Grundplatte (7) positioniert sind und mit Schäften (8) zusammenwirken, die mit der Struktur (12) verbunden sind.

10. Visiersystem (1) nach einem der vorstehenden Ansprüche, wobei die Struktur (12) eine Schnittstellenplatte zur Montage auf einer unteren Wand einer Ummantelung (5) des Fahrzeugs ist, wobei die Schnittstellenplatte eine Ebene aufweist, die parallel zur Achse der Kanone, mit der das Fahrzeug ausgestattet ist, verläuft.

11. Visiersystem (1) nach einem der vorstehenden Ansprüche, wobei die Struktur (12) eine untere Wand einer Ummantelung (5) des Fahrzeugs ist.

12. Visiersystem (1) nach einem der vorstehenden Ansprüche, umfassend Verschlussdichtungen, die die Abdichtung des Systems (1) gewährleisten, wenn sich die Optikeinheit (2) in der ersten Stellung befindet, wobei eine erste Dichtung (16) am oberen Ende der Halterung (6) angeordnet ist und sich auf der Struktur (12) im Fahrzeuginneren positionieren soll, wenn sich die Optikeinheit (2) in der ersten Stellung befindet, und eine zweite Dichtung (14) außerhalb des Fahrzeugs an einem Umfang einer Öffnung angeordnet werden soll, die in der Ummantelung (5) ausgebildet ist, um den Durchgang der Optikeinheit (2) zu ermöglichen.

13. Visiersystem (1) nach einem der vorstehenden Ansprüche, umfassend einen Schnittstellensockel (3), der zwischen der Halterung (6) und der Optikeinheit (2) positioniert ist und die Platzierung von Optikeinheiten (2) verschiedener Arten ermöglicht.

14. Militärisches Landfahrzeug, umfassend ein versenkbares Visiersystem (1) nach einem der vorstehenden Ansprüche.

## Claims

1. A retractable sight system (1) designed to equip a land military vehicle, said system (1) comprising an optical unit (2) and a mechanism ensuring in use the translation movement of the optical unit (2) between two positions, a first position being outside the vehicle and a second position being inside the vehicle, such that said mechanism is retractable so as to reduce the bulk inside the vehicle when the optical unit (2) is in the first position, wherein the movement of the optical unit (2) between the second position and the first position allows, along the translation axis, to reduce the length occupied within the vehicle by more than 80%, and preferably more than 90%.

2. The sight system (1) according to Claim 1, wherein the retractable mechanism is a scissor mechanism (4).

3. The sight system (1) according to any one of the preceding claims, comprising a support (6) mounted movably and on which the optical unit (2) rests, said support (6) comprising a planar base that is also called base plate (7).

4. The sight system (1) according to one of Claims 2 to 3, wherein the scissor mechanism (4) comprises branches respectively situated on either side of the optical unit (2), said branches being coupled at one end to the base plate (7) and at the other end to a structure (12) on which the base plate (7) is positioned when the optical unit (2) is in the first position.

5. The sight system (1) according to any one of the preceding claims, comprising several constant-pressure springs (9) serving as a counterweight to the weight of the sight system (1).

6. The sight system (1) according to Claim 5, wherein the springs (9) are positioned on either side of the optical unit (2) and connect the base plate (7) to the structure (12).

7. The sight system (1) according to any one of the preceding claims, comprising a repositioning mechanism that ensures, at the end of the movement toward the first position, a precise placement of the base plate (7) on the structure (12).

8. The sight system (1) according to Claim 7, wherein the repositioning mechanism comprises fingers (15) positioned on the support (6) and notches (13) secured to the structure (12), said fingers (15) cooperating with the notches (13) to ensure the parallelism of the system (1) relative to the axis of a cannon equipping the vehicle.

9. The sight system (1) according to any one of the preceding claims, comprising means for locking the sight system (1) in the first position, said means comprising quick-tightening nuts (11) positioned on the base plate (7) and cooperating with rods (8) that are secured to the structure (12).

10. The sight system (1) according to any one of the preceding claims, wherein the structure (12) is an interface plate designed to be mounted on an inner wall of the shell (5) of the vehicle, said interface plate having a parallel plane relative to the axis of the cannon equipping the vehicle.

11. The sight system (1) according to any one of the preceding claims, wherein the structure (12) is an inner wall of a shell (5) of the vehicle.

12. The sight system (1) according to any one of the preceding claims, comprising sealing gaskets ensuring sealing of the system (1) when the optical unit (2) is in the first position, a first seal (16) being placed on the upper end of the support (6) and designed to be positioned on the structure (12) inside the vehicle when the optical unit (2) is in the first position, a second seal (14) being designed to be placed outside the vehicle on a perimeter of an opening formed in the shell (5) to allow the passage of the optical unit (2).

13. The sight system (1) according to any one of the preceding claims, comprising an interface base (3) positioned between the support (6) and the optical unit (2) and allowing to place different types of optical units (2).

14. A land military vehicle comprising a retractable sight system (1) according to any one of the preceding claims.
